# EUROPEAN PATENT APPLICATION

(11) **EP 4 793 792 A1**
(43) Date of publication of application: **19.08.2026**
(21) Application number: 26153933.2
(22) Date of filing: 23.01.2026
(51) Int. Cl.: G06F 16/31

(54) **DATA RETRIEVAL SYSTEM WITH CONTROLLED ACCESS BASED UPON SECURITY LEVELS**

(30) Priority: 14.02.2025 US 202563834392 P; 22.08.2025 US 202519307354
(71) Applicant: RTX Corporation, Farmington, CT 06032 (US)
(72) Inventor: ALAGHARI, Santosh, Bangalore (IN); OJHA, Sujit Kumar, Bangalore (IN); JANDHYALA, Aswini Kumar, Bangalore (IN); KULKARNI, Shreeraj Milind, Nashik (IN); KOPP, Joel Bennett, West Des Moines, Iowa (US)
(74) Representative: Dehns

(57) **Abstract**

A method of controlling access to information includes the steps of storing documents in a vector database in a plurality of distinct indices with each of the distinct indices associated with a distinct access level based upon at least one of a security level and an appropriate geographic location, receiving a query from a user for information, and identifying at least one of a security level and a geographic location of the user, and matching the identified at least one of the security level and the geographic location with at least one of a plurality of aliases, with each of the plurality of aliases providing access to particular ones of the indices in the vector database, accessing the vector database to match the appropriate indices to the identified alias and displaying appropriate information from the appropriate indices. A document management system and access combination is also disclosed.

## Description

### REFERENCE TO RELATED APPLICATION

This application claims priority to U.S. Provisional Application Serial No. 63/834,392 filed on February 14, 2025.

### BACKGROUND OF THE INVENTION

This application relates to a generative artificial intelligence (Gen AI) large language model retrieval augmented generation (LLM-RAG) application with processing system and method which allows access to select documents in a vector database based upon at least one of a requestor's security level and geographic location.

Modern corporate entities are becoming more and more global. Thus, there could be users having access to a particular data storage base in a number of different geographic locations through various generative artificial intelligence applications. Of course, the users may also have different security levels.

Under modem laws and regulations, not only does the user's security level control to which documents or the responses the user might have access, but so too does their geographic location.

### SUMMARY OF THE INVENTION

In a featured embodiment, a method of controlling access to information includes the steps of storing documents in a vector database in a plurality of distinct indices with each of the distinct indices associated with a distinct access level based upon at least one of a security level and an appropriate geographic location, receiving a query from a user for information, and identifying at least one of a security level and a geographic location of the user, and matching the identified at least one of the security level and the geographic location with at least one of a plurality of aliases, with each of the plurality of aliases providing access to particular ones of the indices in the vector database, accessing the vector database to match the appropriate indices to the identified alias and displaying appropriate information from the appropriate indices.

In another embodiment according to the previous embodiment, the vector database communicates to and from a retrieval augmented generation (RAG) pipeline.

In another embodiment according to any of the previous embodiments, a module for matching the aliases also communicates with the RAG pipeline and to the vector database.

In another embodiment according to any of the previous embodiments, the RAG pipeline communicates with a large language module that generates a response for the information to be displayed, and is associated with the displayed appropriate information.

In another embodiment according to any of the previous embodiments, documents are ingested into an input folder system, and identified with a folder that is associated with each of the vector database indices.

In another embodiment according to any of the previous embodiments, the ingested documents pass through a document class and folder extraction step to determine if the document actually matches with appropriate ones of the vector database indices, and if not then ingestion is stopped, and if there is a match then the document is passed to the vector database.

In another embodiment according to any of the previous embodiments, the RAG pipeline communicates with a large language module that generates a response for the information to be displayed, and is associated with the displayed appropriate information.

In another embodiment according to any of the previous embodiments, documents are ingested into an input folder system, and identified with a folder that is associated with each of the vector database indices.

In another embodiment according to any of the previous embodiments, documents are ingested into an input folder system, and identified with a folder that is associated with each of the vector database indices.

In another embodiment according to any of the previous embodiments, the ingested documents pass through a document class and folder extraction step to determine if the document actually matches with appropriate ones of the vector database indices, and if not then ingestion is stopped, and if there is a match then the document is passed to the vector database.

In another featured embodiment, a document management system and access combination includes processing circuitry and a memory including at least a vector database. A plurality of user computers is located in distinct geographical locations with there being a plurality of countries among the distinct geographic locations. The processing circuitry is operable for controlling access to information, and storing documents in the vector database in a plurality of distinct indices with each of the distinct indices carrying a distinct access level based upon at least one of a security level and an appropriate geographic location. The processing circuity is also operable for receiving a query from one of the user computers for information, and identifying at least one of a security level and a geographic location of the user, and matching the identified at least one of security level and geographic location with at least one of a plurality of aliases, with each of the plurality of aliases providing access to particular ones of the indices in the vector database. The processing circuity is also operable for accessing the vector database to match the appropriate indices under the identified alias. The processing circuity is also operable for displaying information from the accessible indices.

In another embodiment according to any of the previous embodiments, the vector database communicates to and from a retrieval augmented generation (RAG) pipeline.

In another embodiment according to any of the previous embodiments, a module for matching the aliases also communicates with the RAG pipeline and to the vector database.

In another embodiment according to any of the previous embodiments, the RAG pipeline communicates with a large language module that generates a response for the information to be displayed, and is associated with the displayed appropriate information.

In another embodiment according to any of the previous embodiments, documents are ingested into an input folder system, and identified with a folder that is associated with each of the vector database indices.

In another embodiment according to any of the previous embodiments, the processing circuitry operable to pass the ingested documents through a document class and folder extraction to determine if the document actually matches with appropriate ones of the vector database indices, and if not then ingestion is stopped, and if there is a match then the document is passed to the vector database.

In another embodiment according to any of the previous embodiments, the RAG pipeline communicates with a large language module that generates a response for the information to be displayed, and is associated with the displayed appropriate disclosure.

In another embodiment according to any of the previous embodiments, documents are ingested into an input folder system, and identified with a folder that is associated with each of the vector database indices.

In another embodiment according to any of the previous embodiments, documents are ingested into an input folder system, and identified with a folder that is associated with each of the vector database indices.

In another embodiment according to any of the previous embodiments, the processing circuitry operable to pass the ingested documents through a document class and folder extraction to determine if the document actually matches with appropriate ones of the vector database indices, and if not ingestion is stopped, and if there is a match, the document is passed to the vector database.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows a data storage base for a international corporate entity.
Figure 2 shows a detail of a processing system for storing information to be utilized in the Figure 1 system.
Figure 3 shows two distinct displays that could be provided to users based upon a security level.
Figure 4 is a flow chart of a method according to this disclosure.

### DETAILED DESCRIPTION

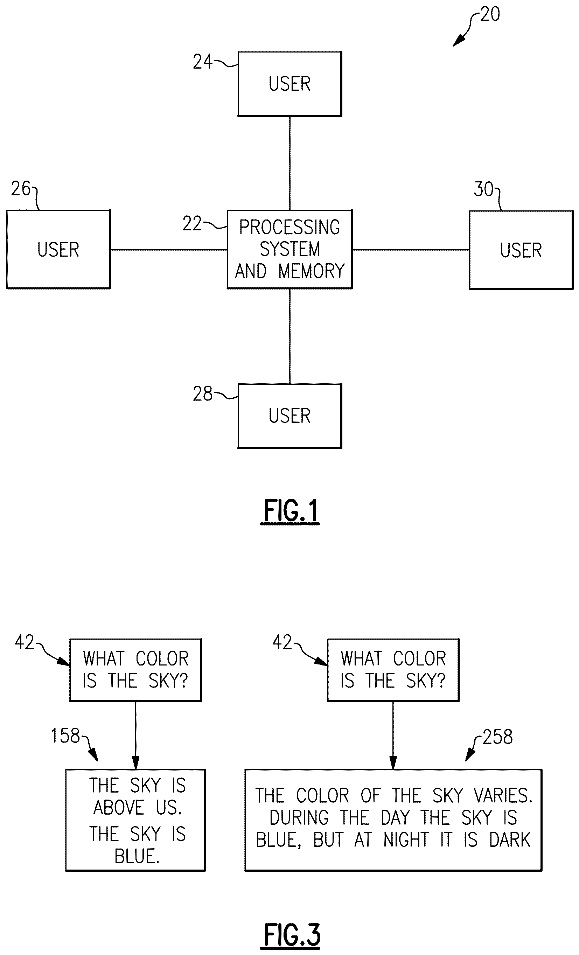

A corporate data storage system 20 is illustrated in Figure 1 and includes a processing system and memory 22 for receiving requests for information from a plurality of users 24, 26, 28 and 30. The users could have distinct security levels, and could be resident in distinct geographic locations (e.g., countries or jurisdictions). As such, some of the information on the processing system and memory 22 could be sensitive and accessible only to the geographic location of the user 28, but not the users 24, 26 and 30. The same could be true based upon each user's security level. This application discloses a method and system that controls access to data stored in the processing system and memory 22 dependent upon a security level and geographic location of the users 24, 26, 28 and 30.

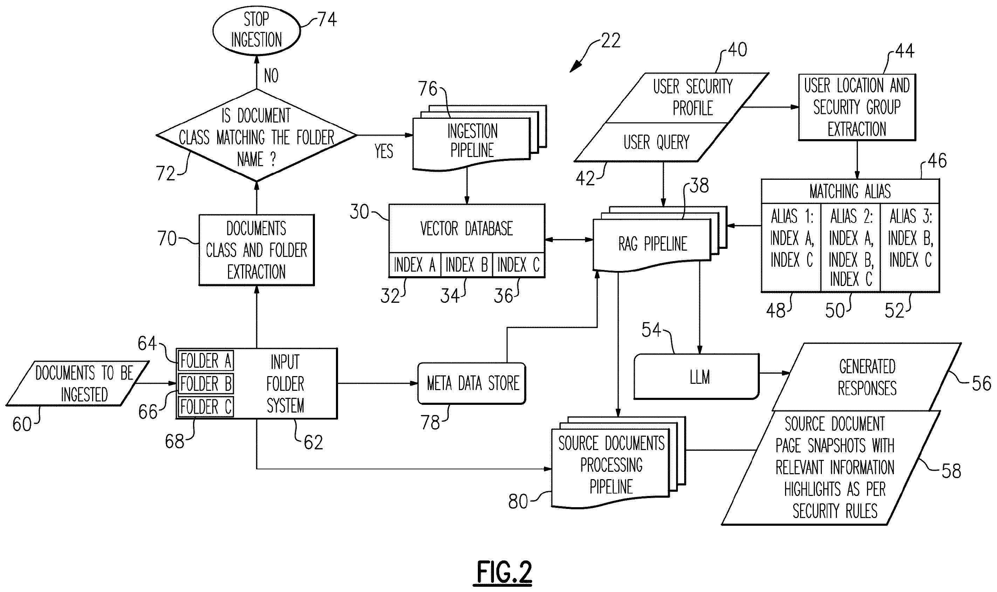

As shown in Figure 2, the processing system 22 includes a vector database 30. The vector database 30 is part of a memory that stores different information in the form of documents into distinct indices A (32), B (34) and C (36). These indices are accessible to and from a retrieval augmented generation (RAG) pipeline 38. A RAG pipeline is a known system for accurately retrieving certain information from a database for use by a large language module (LLM). The indices A, B, C will each contain a respective set of documents of a similar security level, which differs across the indices A, B, C. Although three indices are disclosed, fewer or more than three indices may be established.

A user may communicate with the RAG pipeline 38, and supply a query 42. This will pass to the RAG pipeline 38 along with the user's security profile 40. The user's security profile 40 will also pass to a user location and security group extraction 44 that will pass to a module 46 that will match the user's security and geographic location with a particular alias 48, 50, 52.

As shown, there are three aliases 48, 50 and 52 (although of course there could be more or fewer) that identify particular ones of the indices A, B, C accessible to the particular alias. This match also passes back to the RAG pipeline 38. All of this passes to a LLM 54 which will generate responses 56. The LLM 54 may be utilized to generate (e.g., natural language) responses to user queries based on any documents indexed by the vector database 30. In addition to what is described above, the LLM refers to various prompts or contexts to generate appropriate answers.

The generated responses will be displayed as per security rules at 58. Thus, what will be displayed to the user (e.g., in a user interface) at 58 is limited by the matching of the aliases in module 46.

Documents are ingested at 60 into the processing system 22. The documents are identified for inclusion in a folder A (64), B (66) and C (68) based upon geographic accessibility and/or security level. As mentioned above, there could of course be more or fewer folders.

The input folder system is then passed into a document class and folder extraction module 70. The processing system 22 then determines whether the document class matches the folder name at 72. If not, then the ingestion is stopped. If it does in fact match then it passes to an ingestion pipeline 76, and into the vector database 30 to be matched with the appropriate indices 32, 34, 36.

The input folder system 62 also passes to a metadata storage 78 which communicates with the RAG pipeline 38. Both input folder system 62 and the RAG pipeline 38 communicate with a source document processing pipeline 80, which ultimately communicates to supply the documents to be displayed at 58.

Now, by ingesting documents within an appropriate security level, both as to security level of the user, and appropriate geographic locations for the user, the processing system 22 ensures that only appropriate data is displayed to a particular user requesting information.

As an example, Figure 3 shows a light hearted illustration of two different users and the displays 158 and 258 they may receive based upon their security level and/or geographic location. A lower security level user and/or a user in a geographic location which does not have access to all information, may ask what color is the sky. The answer 158 may be:
*"The sky is blue. "*

However, that same request from a user of a higher level security, and/or in a geographic location with lesser restriction may read 258:
*"The color of the sky varies. During the day the sky is blue, but at night it is dark. "*

Again, this is a trivial example, but illustrates the idea that additional information may be available to a requesting user based upon a security level.

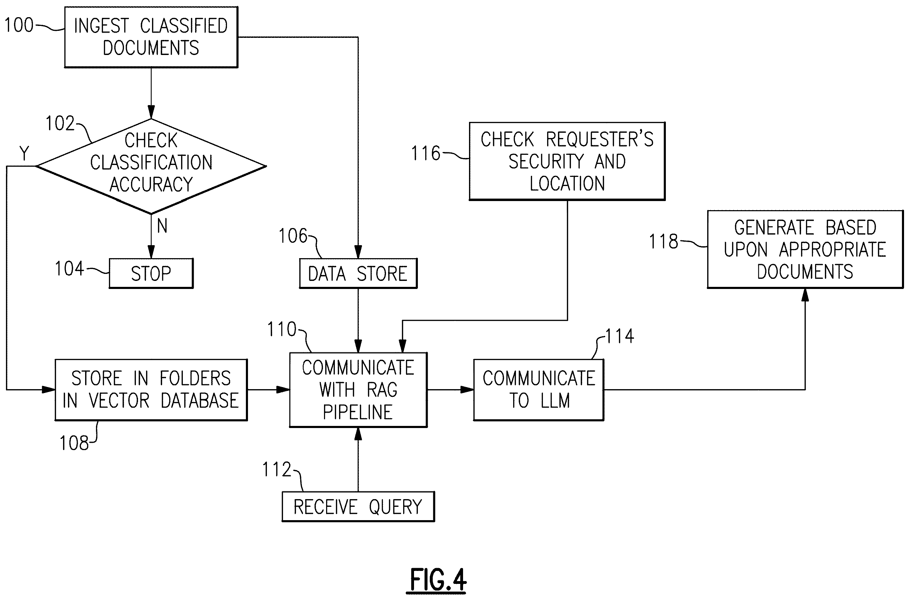

Figure 4 shows a flow chart according to this disclosure. At step 100, documents are ingested and classified. At step 102, the classification's accuracy is checked. If the identified folder is not accurate then at step 104 the ingestion is stopped. If the document classification does not match the identified folder, then that document is ignored and the system moves on to the next document.

However, if the classification is accurate then at step 108 the documents are stored in a vector database in appropriate indices.

In addition, in parallel, the ingested documents are sent to data storage 106. Both steps 106 and 108 communicate with a RAG pipeline at 110.

At step 112, the system may receive a query from a particular user.

The RAG pipeline communicates with a LLM at step 114, and the user's security and location are checked to identify information to which the particular user may be privy. At step 118, there is a display generated based upon appropriate documents for the particular user's level.

Of course, the disclosed system would include an appropriate RAG pipeline and LLM. In addition, there would be an appropriate computer system supporting the entirety of the processing system and memory 22.

The processing system and memory 22 may include on premises or cloud technology based one or more computer processors, memory, storage means, network devices, input and/or output devices, and/or interfaces. The computing devices may be operable to execute one or more software programs. The computing devices may be operable to communicate with one or more networks established by one or more computing devices. The memory may include UVPROM, EEPROM, FLASH, RAM, ROM, DVD, CD, a hard drive, or other computer readable medium which may store data and/or the functionality of this description. The computing device(s) may be collectively operable to execute any of the functionality disclosed herein. The computing devices may be a desktop computer, laptop computer, smart phone, tablet, or any other computer device. Input devices may include a keyboard, mouse, touchscreen, etc. The output devices may include a monitor, speakers, printers, etc. Each of the computing devices may include one or more processors coupled to memory. The computing devices may be coupled to each other by one or more connections. The connection may be a wired and/or wireless connection. The connections may be established over one or more networks and/or other computing systems. In addition to these computer systems, the computing devices may be cloud based systems also.

A method of controlling access to information under this disclosure could be said to include the steps of storing documents in a vector database in a plurality of distinct indices with each of the distinct indices associated with a distinct access level based upon at least one of a security level and an appropriate geographic location, receiving a query from a user for information, and identifying at least one of a security level and a geographic location of the user, and matching the identified at least one of the security level and the geographic location with at least one of a plurality of aliases, with each of the plurality of aliases providing access to the particular one(s) of the indices in the vector database, accessing the vector database to match the appropriate indice(s) to the identified alias and displaying appropriate information from the appropriate indices.

A document management system and access combination under this disclosure could be said to include a processing system and a memory including at least a vector database. A plurality of users computers are located in distinct geographical location with there being a plurality of countries among the distinct geographic locations. The combination is operable for controlling access to information, and storing documents in the vector database in a plurality of distinct indices with each of the distinct indices carrying a distinct access level based upon at least one of a security level and an appropriate geographic location. The processing circuitry is also operable for receiving a query from one of the user computers for information, and identifies at least one of a user's security level and a geographic location of the user, and matches the identified at least one of security level and geographic location with at least one of a plurality of aliases, with each of the plurality of aliases providing access to the particular ones of the indices in the vector database. The processing circuity is also operable for accessing the vector database to match the appropriate indices under the identified alias. The processing circuity is also operable for displaying information from the accessible indices.

Although embodiments have been disclosed, a worker of ordinary skill in this art would recognize that modifications would come within the scope of this disclosure. For that reason, the following claims should be studied to determine the true scope and content of this disclosure.

## Claims

1. A method of controlling access to information comprising the steps of:
storing documents in a vector database in a plurality of distinct indices with each of the distinct indices associated with a distinct access level based upon at least one of a security level and an appropriate geographic location;
receiving a query from a user for information, and identifying at least one of a security level and a geographic location of the user, and matching the identified at least one of the security level and the geographic location with at least one of a plurality of aliases, with each of the plurality of aliases providing access to particular ones of the indices in the vector database;
accessing the vector database to match the appropriate indices to the identified alias; and
displaying appropriate information from the appropriate indices.

2. The method as set forth in claim 1, wherein the vector database communicates to and from a retrieval augmented generation (RAG) pipeline.

3. The method as set forth in claim 2, wherein a module for matching the aliases also communicates with the RAG pipeline and to the vector database.

4. The method as set forth in claim 2 or 3, wherein the RAG pipeline communicates with a large language module that generates a response for the information to be displayed, and is associated with the displayed appropriate information.

5. The method as set forth in any preceding claim, wherein documents are ingested into an input folder system, and identified with a folder that is associated with each of the vector database indices.

6. The method as set forth in claim 5, wherein the ingested documents pass through a document class and folder extraction step to determine if the document actually matches with appropriate ones of the vector database indices, and if not then ingestion is stopped, and if there is a match then the document is passed to the vector database.

7. A document management system and access combination comprising:
processing circuitry;
a memory including at least a vector database;
a plurality of user computers located in distinct geographical locations with there being a plurality of countries among the distinct geographic locations;
the processing circuitry operable for controlling access to information, and storing documents in the vector database in a plurality of distinct indices with each of the distinct indices carrying a distinct access level based upon at least one of a security level and an appropriate geographic location;
the processing circuity also operable for receiving a query from one of the user computers for information, and identifying at least one of a security level and a geographic location of the user, and matching the identified at least one of security level and geographic location with at least one of a plurality of aliases, with each of the plurality of aliases providing access to particular ones of the indices in the vector database;
the processing circuity also operable for accessing the vector database to match the appropriate indices under the identified alias; and
the processing circuity also operable for displaying information from the accessible indices.

8. The combination as set forth in claim 7, wherein the vector database communicates to and from a retrieval augmented generation (RAG) pipeline.

9. The combination as set forth in claim 8, wherein a module for matching the aliases also communicates with the RAG pipeline and to the vector database.

10. The combination as set forth in claim 8 or 9, wherein the RAG pipeline communicates with a large language module that generates a response for the information to be displayed, and is associated with the displayed appropriate information.

11. The combination as set forth in any of claims 7 to 10, wherein documents are ingested into an input folder system, and identified with a folder that is associated with each of the vector database indices.

12. The combination as set forth in claim 11, wherein the processing circuitry operable to pass the ingested documents through a document class and folder extraction to determine if the document actually matches with appropriate ones of the vector database indices, and if not then ingestion is stopped, and if there is a match then the document is passed to the vector database.
